**Europäisches Patentamt**

**European Patent Office**

**Office européen des brevets**

(11) Veröffentlichungsnummer: **0 154 718**
**A2**

(12) **EUROPÄISCHE PATENTANMELDUNG**

(21) Anmeldenummer: **84116241.5**

(22) Anmeldetag: **22.12.84**

(51) Int. Cl.⁴: **F 02 B 19/14**

(30) Priorität: **29.02.84  DE 3407349**

(43) Veröffentlichungstag der Anmeldung: **18.09.85**
**Patentblatt 85/38**

(84) Benannte Vertragsstaaten: **DE FR GB**

(71) Anmelder: **ROBERT BOSCH GMBH, Postfach 50,**
**D-7000 Stuttgart 1 (DE)**

(72) Erfinder: **Zimmermann, Klaus-Dieter, Dr.,**
**Weinkellerstrasse 21, D-7143 Vaihingen (DE)**
Erfinder: **Hofbauer, Peter, Dr., Ludwig-Beck-Strasse 16,**
**D-3180 Wolfsburg (DE)**

(54) **Brennkraftmaschine mit einer in eine Vorkammer hineinragenden Glühzündeinrichtung.**

(57) Es wird eine Brennkraftmaschine vorgeschlagen die pro Zylinder einen Hauptbrennraum (3) und eine Vorbrennkammer (1) aufweist. Die Vorbrennkammer weist einen tangential in diese einmündenden Überströmkanal (2) auf, eine Kraftstoffeinspritzeinrichtung (10) und eine Glühzündeinrichtung (14), die aus einem oder zwei stabförmigen, in die Vorbrennkammer hineinragenden Teilen besteht, die so angeordnet sind, daß sie außerhalb der Projektion der Eintrittsöffnung (15) des Überströmkanals (2) in die Vorbrennkammer liegen und mit ihrer Spitze in den Randbereich des von der Kraftstoffeinspritzvorrichtung (10) abgegebenen Kraftstoffstrahles (11) ragen. Durch die Verwendung von insbesondere zwei Glühzündeinrichtungen können in vorteilhafter Weise während des Betriebs der Brennkraftmaschine auftretende Abweichungen des Kraftstoffstrahles von einer vorgegebenen Position im Sinne einer Beibehaltung optimaler Zündfähigkeit des Kraftstoffs kompensiert werden.

R. **19243**                        0154718

24.2.1984 Bö/Jä

ROBERT BOSCH GMBH, 7000 Stuttgart 1

## Brennkraftmaschine

Stand der Technik

Die Erfindung geht von einer Brennkraftmaschine nach
der Gattung des Hauptanspruchs aus. Bei einer bekannten
Brennkraftmaschine dieser Art wird als Glühzündeinrichtung eine stabförmige Glühkerze verwendet, die im schrägen
Winkel zum Kraftstoffstrahl in eine Wirbelkammer eingeführt wird, die annähernd kugelförmig ausgestaltet ist
und bei der der Kraftstoffstrahl in Drehrichtung der über
den Überströmkanal einströmenden Luft gerichtet ist,
und zwar etwa tangential zu einer mittleren Schicht
des rotierenden Luftwirbels innerhalb der Wirbelkammer.
Bei der bekannten Brennkraftmaschine wird vorgeschlagen,
tastend, durch Verändern der Eintauchtiefe die Spitze
der Glühkerze in einen optimalen Punkt in bezug auf den
sich im Laufe des Einspritzweges aufbündelnden Kraftstoffstrahl zu bringen. Dabei liegt die Achse der
Glühkerze parallel zur Symmetrieebene der Wirbelkammer,
durch die der Kraftstoffstrahl führt und es endet die
Spitze der Glühkerze in einem als optimal bezeichneten
Punkt in einer Mittelebene des Strahles senkrecht zur
vorgenannten Ebene. Es wird bei der bekannten Einrichtung
davon ausgegangen, daß bei zu geringer Annäherung der
Spitze an den Strahl die Zeit bis zur Entflammung des

...

0194243

eingespritzten Kraftstoffes bei Kaltstart in unerwünschter
Weise verlängert wird und daß andererseits bei zu großem
Überlappen von der Glühkerze über den angestrebten Punkt
hinaus die thermische und schwingungstechnische Belastungsgrenze der Glühkerze überschritten wird.

Diese Anordnung, deren Zielsetzung darin besteht, daß
die gerichtete Strömung innerhalb der Wirbelkammer insbesondere bei hohen Drehzahlen möglichst wenig durch
die Glühkerze gestört werden soll, hat den Nachteil,
daß bei Lageänderung des Einspritzstrahles während des
Betriebes z. B. durch Verkoken sehr schnell ein erhöhter
Abstand des Strahles zur Glühkerze hin auftreten kann,
so daß es je nach Betriebszustand der Brennkraftmaschine
und Erhaltungs- und Funktionszustand der Kraftstoffeinspritzdüse zu stark veränderlichen Entflammungsbedingungen kommen kann. Für die Strahlabweichung von der vorgesehenen Lage sind schwer beherrschbar Strömungsvorgänge
von Einfluß, so daß sich bei der vorgeschlagenen Lösung
in bezug auf die konventionelle Lösung, bei der die Glühkerze innerhalb der Mittelebene liegt, in der auch der
Kraftstoffstrahl angeordnet ist, keine Vorteile in bezug
auf die Konstanz der Entflammungsbedingungen ergeben.

Im allgemeinen ist bei bekannten Wirbelkammeranordnungen
die Lage des Überströmkanals so, daß seine Achse und
die Achse des Kraftstoffstrahles in einer Ebene liegen.
Wenn zudem auch die Glühkerzenachse in derselben Ebene
angeordnet ist, wird der Schaft der Glühkerze stark von
der einströmenden Luft angeblasen und gekühlt, so daß
die erreichbare Endtemperatur der Glühkerze gesenkt und

...

die Entflammungsbedingungen verschlechtert werden. Auch muß bei einer solchen zentrischen Lage vermieden werden, daß die Spitze der Glühkerze nicht so weit in den Kraftstoffstrahl eingeführt wird, da hier wiederum die thermische Belastung und die mechanische Belastung der Glühkerze stark zunimmt. Somit können mit den bekannten Lösungen keine optimalen Bedingungen eingehalten werden.

Vorteile der Erfindung

Die erfindungsgemäße Brennkraftmaschine mit den kennzeichnenden Merkmalen des Hauptanspruchs hat demgegenüber den Vorteil, daß die Glühzündeinrichtung, die z. B. die Form einer bekannten Glühkerze haben kann und stabförmig ausgebildet ist, nicht bzw. nicht voll vom in die Vorbrennkammer eintretenden Frischluftstrahl unmittelbar getroffen wird. Somit wird vermieden, daß die Glühzündeinrichtung nachteiligerweise abgekühlt wird.

Eine vorteilhafte Weiterbildung besteht in der Ausgestaltung nach Anspruch 2, dadurch die eingangs genannte Bedingung erfüllt wird und die Glühzündeinrichtung in einen Bereich des Kraftstoffstrahles gebracht wird, bei der bei einer Strahlabweichung von der beabsichtigten Normallage sich diese Abweichung weniger stark auswirkt als bei einer tangentialen Annäherung der Glühzündeinrichtung an den Kraftstoffstrahl nach dem eingangs genannten Stand der Technik.

Insbesondere besteht eine wesentliche vorteilhafte Ausgestaltung darin, daß die Bedingungen des Anspruchs 3 erfüllt sind. Hier werden Strahlabweichungen, die in bezug auf die seitliche Annäherung der Glühzündeinrichtung an den Strahl wirksam werden können, dadurch kompensiert,

...

0154924

daß zumindest eine der beiden Glühzündeinrichtungen
oder gar beide in einem voll wirksamen Abstand zum
Kraftstoffstrahl bleiben. Abweichungen des Kraftstoffstrahles in Achsrichtung der Glühzündeinrichtungen sind
hingegen von geringerer Bedeutung. Weiterhin können
durch die Weiterbildungen nach Anspruch 4 und Anspruch
5 geometrische Besonderheiten der Kammer und der verwendeten Einspritzdüsen berücksichtigt werden. Durch
die nicht tangentiale Antastung der Glühzündeinrichtungen an den Kraftstoffstrahl wird hier die Gefahr
der zu großen Entfernung des Kraftstoffstrahls
von den Glühzündeinrichtungen mit den genannten Nachteilen für die Sicherheit der Kraftstoffentflammung
vermieden und es wird auch vermieden, daß die Glühzündeinrichtungen thermisch zu stark belastet werden.
Durch die Ausgestaltung nach Anspruch 6 kann erreicht
werden, daß auch die Strahlausweichung des Kraftstoffstrahls in Längsrichtung zur Mittelebene erfaßt werden.

Zeichnung

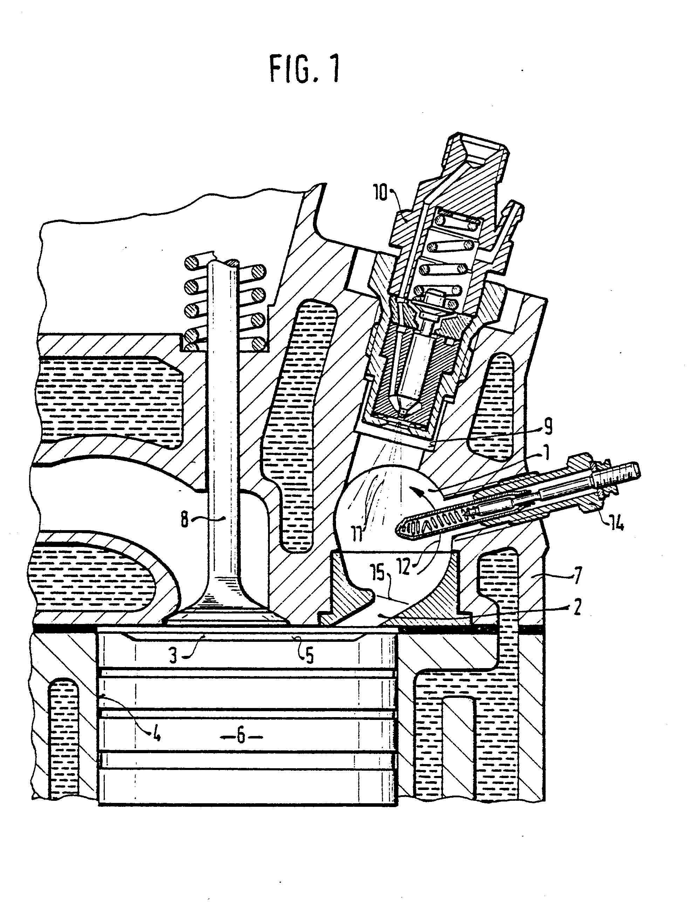

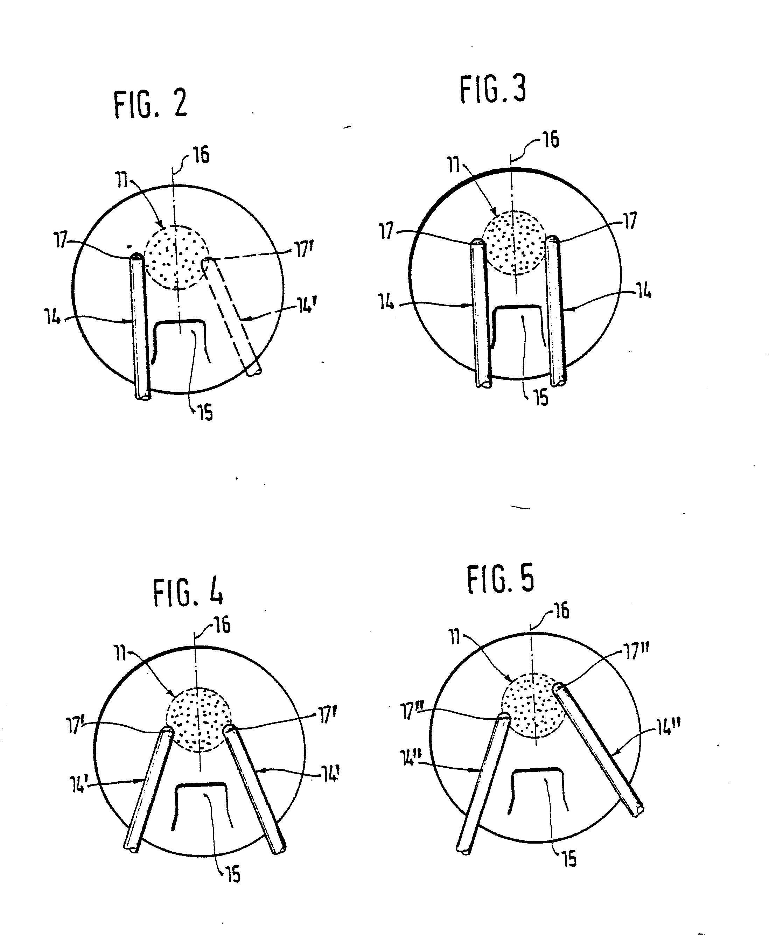

Vier Ausführungsbeispiele der Erfindung sind in der Zeichnung dargestellt und werden in der nachfolgenden Beschreibung näher erläutert. Es zeigen Figur 1 einen Schnitt
durch einen Teil eines Zylinderkopfs einer Brennkraftmaschine mit geschnittener Wirbelkammer und einer Glühkerzenanordnung bekannter Art, Figur 2 einen Schnitt
senkrecht zur Darstellungsebene von Figur 1 durch die
Vorbrennkammer mit einer Anordnung der Glühzündeinrichtung in erfindungsgemäßer Weise nach einem ersten
Ausführungsbeispiel mit einer gestrichelt eingetragenen
zweiten Lösung, Figur 3 ein drittes Ausführungsbeispiel
der Erfindung mit zwei seitlich neben dem Kraftstoffstrahl angeordneten Glühkerzen, Figur 4 ein viertes Aus-

...

0154718
19243

führungsbeispiel der Erfindung mit zwei Glühkerzen, die
zueinander geneigt in den Randbereich des Kraftstoffstrahls eintauchen und Figur 5 ein fünftes Ausführungsbeispiel mit zwei zueinander versetzten und zueinander
geneigten Glühzündeinrichtungen.

Beschreibung der Ausführungsbeispiele

Figur 1 zeigt einen Schnitt durch eine Vorbrennkammer 1
in Form einer bekannten Wirbelkammer mit einem tangential
in die Vorbrennkammer einmündenden Überströmkanal 2.
Dieser mündet in bekannter Weise in einem stumpfen Winkel
zur Stirnfläche 5 eines Brennkraftmaschinenkolbens 6 ein,
der in einer Zylinderbohrung 4 zusammen mit einem Zylinderkopf 7 einen Hauptbrennraum 3 einschließt. Der Zylinderkopf ist im Teilschnitt dargestellt und in diesem ist
auch die Vorbrennkammer angeordnet. Weiterhin enthält der
Zylinderkopf in bekannter Weise die Gaswechselventile 8
für den Gaswechsel des Hauptbrennraumes.

Etwa tangential geht von der Vorbrennkammer eine Aufnahmebohrung 9 für ein Kraftstoffeinspritzventil 10 ab, durch
das in bekannter Weise gesteuert ein sich kegelförmig aufweitender Kraftstoffstrahl 11 so in die Vorbrennkammer
gelangt, daß er die Drehrichtung der über den Überströmkanal 2 einströmenden Luft unterstützt und auf der ablaufenden Seite des durch einen Pfeil 12 gekennzeichneten
Wirbels liegt.

In den Zylinderkopf ist eine Glühzündeinrichtung 14 in
Form einer stabförmigen Glühkerze eingeschraubt, deren
Spitze in den äußersten Bereich des kegelförmigen
Kraftstoffstrahles im Bereich des Flächenmittelpunkts
der Vorbrennkammer endet.

...

0154718
19243

Die Lage der Glühzündeinrichtung 14 wird gemäß der Erfindung wie in Figur 2 gezeigt modifiziert. In Figur 2 ist ein Schnitt durch die Vorbrennkammer parallel zur Stirnfläche 5 des Kolbens 6 wiedergegeben in Blickrichtung zum Eintritt des Überströmkanals 2. Dieser ist durch eine Eintrittsöffnung 15 erkennbar und liegt mittig in der Mittelebene 16 der Brennkammer. Auch der Kraftstoffstrahl 11 läuft innerhalb der Mittelebene 16. In einer ersten Ausgestaltung ist nun die stabförmige Glühzündeinrichtung 14 dem Kraftstoffstrahl 11 so zugeordnet, daß sie mit ihrer Seitenfläche an ihrer Spitze 17 in den Randbereich des Kraftstoffstrahles 11 ragt, daß sie mit ihrer Achse parallel zur Mittelebene 16 liegt und außerhalb der Projektion der Eintrittsöffnung 15. In einer zweiten Ausgestaltung ist in Figur 2 eine zweite stabförmige Glühzündeinrichtung 14' gestrichelt eingezeichnet, deren Achse zur Mittelebene 16 geneigt ist und deren Spitze 17' in dem Randbereich des Kraftstoffstrahles 11 eintaucht. Auch diese Glühzündeinrichtung liegt außerhalb der Projektion der Eintrittsöffnung 15 und wird somit nicht von eintretender kalter Luft angeblasen, die geeignet wäre, die Glühzündeinrichtung abzukühlen. Die Schräglage bedeutet gegenüber der anderen, in Figur 2 gezeigten Lösung, den Vorteil, daß die Spitze 17' noch bei größeren seitlichen Abweichungen des Kraftstoffstrahles im Randbereich des Kraftstoffstrahles bleibt.

Figur 3 zeigt eine Anordnung mit zwei stabförmigen Glühzündeinrichtungen 14, deren Achsen parallel zur Mittelebene 16 verlaufen, und die mit ihren Spitzen 17 in ähnlicher Weise wie bei Figur 2 beschrieben, im Bereich eines Durchmessers des Kraftstoffstrahles senkrecht zur Mittelebene in diesen eintauchen. Bei dieser Lösung werden Ausweichungen des Kraftstoffstrahles links und

...

rechts zur einen oder anderen Glühzündeinrichtung hin
kompensiert, so daß immer eine ausreichend hohe Temperatur zur Entflammung des Kraftstoffs zur Verfügung steht.
Beide Glühzündeinrichtungen liegen außerhalb der Projektion
der Eintrittsöffnung 15 des Überströmkanals 2, höchstens
jedoch in deren Randzonen.

Beim Ausführungsbeispiel nach Figur 4 sind über die Ausführungsform nach Figur 3 hinaus die stabförmigen Glühzündeinrichtungen 14' zueinander bzw. zur Mittelebene 16
hin geneigt, so daß ihre Spitzen 17' mehr in radialer
Richtung in den Kraftstoffstrahl 11 eintauchen. Dies hat
den Vorteil, daß bei einer Abweichung des Kraftstoffstrahles 11 in einem geringen Umfang in Richtung der
Mittelebene 17 die Spitzen 17' der Glühzündeinrichtungen
14' noch im Randbereich des Strahles bleiben.

Bei der Ausgestaltung nach Figur 5 sind die zwei stabförmigen Glühzündeinrichtungen 14'' in Abwandlung zur
Ausführungsform nach Figur 4 so angeordnet, daß die
Spitzen 17'' der Glühzündeinrichtungen 14'' in Richtung
der Mittelebene 16 zueinander versetzt im Randbereich
des Kraftstoffstrahles 11 enden, so daß die Spitze der
einen Glühzündeinrichtung auf der zur Eintrittsöffnung
15 hin liegenden Seite des Kraftstoffstrahles in diesen
eintaucht und die Spitze der anderen Glühzündeinrichtung
etwa diametral gegenüberliegend zur erstgenannten Spitze
in den Randbereich des Kraftstoffstrahls eintaucht. Bei
dieser Ausgestaltung werden die Abweichungen des Kraftstoffstrahles im Betrieb der Brennkraftmaschine von der
ursprünglich geplanten Normalstellung sowohl in Richtung
der Mittelebene 16 als auch senkrecht dazu erfaßt, so
daß zumindest immer eine der Glühzündeinrichtungen in
einem wirkungsvollen Kontakt mit dem Randbereich des Kraftstoffstrahles liegt. Wie in Figur 4 so ist auch hier der
Schaft der Glühzündeinrichtungen 14'' bzw. 14' außerhalb
der Projektion der Eintrittsöffnung 15 des Überströmkanals.

R. **19243**
24.2.1984 Bö/Jä

0154718

ROBERT BOSCH GMBH, 7000 Stuttgart 1


Ansprüche


1. Brennkraftmaschine mit einem jedem Zylinder (4) der Brennkraftmaschine zugeordneten Hauptbrennraum (3) und einer über einen Überströmkanal (2) mit diesem verbundenen Vorbrennkammer (1), in die der Überströmkanal im wesentlichen tangential einmündet, die ferner eine Kraftstoffeinspritzeinrichtung (10) aufweist, durch die Kraftstoff in Form eines Kraftstoffstrahles (11) eingespritzt wird, der im Bereich einer Mittelebene (16) durch den Mittelpunkt der Vorbrennkammer liegt, in der auch die Mittelachse des Überströmkanals (2) liegt, wobei die Vorbrennkammer ferner eine durch deren Wand eingeführte Glühzündeinrichtung (14) in Form eines neben der genannten Mittelebene (16) ragenden Teils aufweist, dessen beheiztes Ende (17) bis in den Randbereich des Kraftstoffstrahls (11) in seiner Normallage reicht, dadurch gekennzeichnet, daß die Glühzündeinrichtung (15) außerhalb bzw. weitgehend außerhalb der Projektion der Eintrittsöffnung des Überströmkanals längs des durch diesen in die Vorkammer einströmenden Gasstrahles angeordnet ist.


2. Brennkraftmaschine nach Anspruch 1, dadurch gekennzeichnet, daß die Glühzündeinrichtung (14') zur Mittelebene (16) hin geneigt ist.


. . .

0154718
19243

3. Brennkraftmaschine nach Anspruch 1, dadurch gekennzeichnet, daß zwei Glühzündeinrichtungen in seitlicher Begrenzung des Kraftstoffstrahles (11) beidseitig der Mittelebene (16) vorgesehen sind.

4. Brennkraftmaschine nach Anspruch 3, dadurch gekennzeichnet, daß die Glühzündeinrichtungen (14') zur Mittelebene (16) hin geneigt sind.

5. Brennkraftmaschine nach Anspruch 4, dadurch gekennzeichnet, daß die Glühzündeinrichtungen (14'') eine unterschiedliche Neigung zur Mittelebene (16) hin aufweisen.

6. Brennkraftmaschine nach Anspruch 4 oder 5, dadurch gekennzeichnet, daß die Glühzündeinrichtungen in der Richtung der Mittelebene (16) gesehen versetzt zueinander in dem Randbereich des Kraftstoffstrahles (11) enden.

7. Brennkraftmaschine nach einem der vorstehenden Ansprüche, dadurch gekennzeichnet, daß die Glühzündeinrichtungen stabförmig ausgebildet sind.

FIG. 1

FIG. 2

FIG.3

FIG. 4

FIG. 5